# EUROPÄISCHE PATENTSCHRIFT

(11) **EP 1 699 893 B1**
(45) Veröffentlichungstag und Bekanntmachung des Hinweises auf die Patenterteilung: **09.05.2007**
(21) Anmeldenummer: 04816328.1
(22) Anmeldetag: 16.11.2004
(51) Int. Cl.: C09J 7/00, C09J 7/02

(54) **VERWENDUNG EINES HAFTKLEBESTREIFENS, DER SICH DURCH DEHNENDES VERSTRECKEN IM WESENTLICHEN IN DER VERKLEBUNGSEBENE WIEDER LÖSEN LÄSST, ZUR VERKLEBUNG AUF PAPIER ODER PAPPE**
USE OF AN ADHESIVE STRIP THAT CAN BE REMOVED BY SUBSTANTIALLY STRETCHING IT IN THE PLANE OF ADHESION AND THAT IS TO BE GLUED ONTO PAPER OR CARDBOARD
UTILISATION D'UNE BANDE ADHESIVE DE CONTACT, POUVANT SE DETACHER DE NOUVEAU PAR ETIRAGE SOUS TENSION SENSIBLEMENT DANS LE PLAN DE COLLAGE, EN VUE DE SON APPLICATION PAR COLLAGE SUR PAPIER OU CARTON

(30) Priorität: 22.12.2003 DE 10361162
(43) Veröffentlichungstag der Anmeldung: 13.09.2006
(73) Patentinhaber: tesa AG, 20253 Hamburg (DE)
(72) Erfinder: KRAWINKEL, Thorsten, 22457 Hamburg (DE)
(86) Internationale Anmeldenummer: PCT/EP2004/052973
(87) Internationale Veröffentlichungsnummer: WO 2005/061641

(56) Entgegenhaltungen:
- DE-A1- 10 123 291
- PATENT ABSTRACTS OF JAPAN Bd. 1995, Nr. 04, 31. Mai 1995 (1995-05-31) & JP 07 026210 A (SEKISUI CHEM CO LTD), 27. Januar 1995 (1995-01-27)
- PATENT ABSTRACTS OF JAPAN Bd. 017, Nr. 617 (C-1129), 15. November 1993 (1993-11-15) & JP 05 186747 A (NITTO DENKO CORP), 27. Juli 1993 (1993-07-27)

## Beschreibung

Die Erfindung betrifft die Verwendung eines ein- oder beidseitig haftklebrigen Klebfolienstreifens zur Verklebung auf Papier oder Pappe, der sich durch dehnendes Verstrecken im wesentlichen in der Verklebungsebene wieder lösen lässt und der ein unbefugtes Entfernen des Klebestreifen von Papier oder Pappe durch einen starken Faserausriss der genannten Untergründe aufzeigt.

Bekannt sind elastisch oder plastisch hochdehnbare Selbstklebebänder, welche sich durch dehnendes Verstrecken in der Verklebungsebene rückstands- und zerstörungsfrei wiederablösen lassen, zum Beispiel aus US 4,024,312 A, DE 33 31 016 C2, WO 92/11332 A1, WO 92/11333 A1, DE 42 22 849 A1, WO 95/06691 A1, DE 195 31 696 A1, DE 196 26 870 A1, DE 196 49 727 A1, DE 196 49 728 A1, DE 196 49 729 A1, DE 197 08 366 A1 und DE 197 20 145 A1.

Eingesetzt werden diese häufig in Form von ein- oder beidseitig haftklebrigen Klebestreifen (Klebebandstreifen), welche bevorzugt einen nicht haftklebrigen Anfasserbereich aufweisen, von welchem aus der Ablöseprozess eingeleitet wird. Besondere Anwendungen entsprechender Selbstklebebänder finden sich unter anderem in DE 42 33 872 A1, DE 195 11 288 A1, US 5,507,464 A, US 5,672,402 A und WO 94/21157 A1, spezielle Ausführungsformen sind zum Beispiel in DE 44 28 587 A1, DE 44 31 914 A1, WO 97/07172 A1, DE 196 27 400 A1, WO 98/03601 A1und DE 196 49 636 A1, DE 197 20 526 A1, DE 197 23 177 A1, DE 297 23 198 U, DE 197 26 375 A1, DE 197 56 084 A1, DE 197 56 816 A1, WO 99/31193 A1, WO 99/37729 A1 und WO 99/63018 A1 beschrieben.

Obwohl in der oben zitierten Patentliteratur eine breite Palette von Haftklebemassen für die Verwendung in stripfähigen Selbstklebebändern beschrieben werden, so weisen aktuell im Markt befindliche Handelsprodukte (zum Beispiel Powerstrips^{™} der tesa AG, 3M Command^{™} Adhesive Klebestreifen der Firma 3M, Plastofix^{™} Formule Force 1000 Klebestreifen der Firma Plasto S. A. sowie entsprechende Klebestreifen der Firma Nitoms) sämtlichst Haftklebemassen auf Basis von Styrolblockcopolymeren auf. Vorteile vorgenannter styrolblockcopolymerbasierender Haftklebemassen für den Einsatz in stripfähigen Selbstklebebändern sind zum Beispiel die mit Ihnen erreichbaren sehr hohen Verklebungsfestigkeiten (bedingt unter anderem durch die gleichzeitige Realisierung einer sehr hohen Kohäsion und sehr hoher Klebkräfte), eine ausgeprägte Reduzierung der Haftklebrigkeit beim verstreckenden Ablösen (welches den Ablöseprozess deutlich erleichtert oder gar erst ermöglicht) sowie eine sehr hohe Zugfestigkeit, welche insbesondere für einen reißerfreien Ablöseprozess wesentlich ist.
Eingesetzt werden dabei Styrolblockoopolymere mit radialer oder linearer Struktur. Die Weichblöcke dieser Blockcopolymere bestehen aus Polyisopren oder Polybutadien oder deren Hydrierungsprodukten. Der Einsatz dieser Blockcopolymere führt zu Klebestreifen, die sich auch von empfindlichen Untergründen ablösen lassen, solange die aufzuwendende Ablösekraft nicht so hoch ist, dass der Untergrund dadurch einreißt.

Aufgabe der Erfindung ist es, einen ein- oder beidseitig haftklebrigen Haftklebestreifen für eine wiederablösbare Verklebung bereitzustellen, der sich durch Verstreckung im wesentlichen in der Verklebungsebene aus einer Klebfuge herauslösen lässt und bei einer mäßigen Ablösekraft auf Papier oder Pappe während des Ablösens zu Faserausrissen führt, die ein unbefugtes Ablösen erkennen lassen.

Gelöst wird diese Aufgabe durch die Verwendung eines Haftklebestreifens, der sich durch dehnendes Verstrecken im wesentlichen in der Verklebungsebene wieder lösen lässt, zur Verklebung auf Papier oder Pappe aus einer Klebemasse mit zumindest einem Vinylaromatenblockcopolymer, das säure- oder säureanhydridmodifiziert ist, wobei der Haftklebestreifen beim Ablösen zu Faserausrissen führt.

In einer ersten vorteilhaften Ausführungsform der Erfindung sind die Vinylaromatenblockcopolymere Styrolblockcopolymere, die vorzugsweise einen hydrierten Weichblock enthalten.

Bevorzugt werden Elastomere auf Basis von SEBS (Styrol-Ethylenbutylen-Styrol-Blockcopolymer) beziehungsweise SEPS (Styrol-Ethylenpropylen-Styrol-Blockcopolymer) verwendet, zum Beispiel unter dem Namen Kraton^{™} FG 1901 und Kraton^{™} FG 1924 der Firma Kraton Polymers, beziehungsweise Tuftec^{™} M 1913 und Tuftec^{™} M 1943 der Firma Asahi erhältlich. Durch die Verwendung dieser erfindungsgemäßen Elastomere treten nach einer längeren Verklebungsdauer auf Papier oder Pappe beim Ablösen verstärkt Faserausrisse auf. Die Klebeigenschaften auf den meisten anderen Untergründen hingegen unterscheiden sich bei Verwendung von säure- beziehungsweise säureanhydridmodifizierten Elastomeren nur geringfügig von Klebestreifen auf der Basis derselben Elastomere ohne Modifizierung.

Als Haftklebemassen finden bevorzugt solche auf Basis von Blockcopolymeren enthaltend Polymerblöcke überwiegend gebildet von Vinylaromaten (A-Blöcke), bevorzugt Styrol, und solchen überwiegend gebildet durch Polymerisation von 1,3-Dienen (B-Blöcke), bevorzugt Butadien und Isopren, Anwendung. Sowohl Homo- als auch Copolymerblöcke sind erfindungsgemäß nutzbar. Resultierende Blockcopolymere können gleiche oder unterschiedliche B-Blöcke enthalten, die teilweise, selektiv oder vollständig hydriert sein können. Blockcopolymere können lineare A-B-A-Struktur aufweisen. Einsetzbar sind ebenfalls Blockcopolymere von radialer Gestalt sowie sternförmige und lineare Multiblockcopolymere. Als weitere Komponenten können A-B-Zweiblockcopolymere vorhanden sein. Blockcopolymere von Vinylaromaten und Isobutylen sind ebenfalls erfindungsgemäß einsetzbar. Sämtliche der vorgenannten Polymere können alleine oder im Gemisch miteinander genutzt werden.

Zumindest ein Teil der eingesetzten Blockcopolymere muss dabei säure- oder säureanhydridmodifiziert sein, wobei die Modifizierung hauptsächlich durch radikalische Pfropfcopolymerisation von ungesättigten Mono- und Polycarbonsäuren oder -säureanhydriden, wie zum Beispiel Fumarsäure, Itaconsäure, Citraconsäure, Acrylsäure, Maleinsäureanhydrid, Itaconsäureanhydrid oder Citraconsäureanhydrid, bevorzugt Maleinsäureanhydrid erfolgt. Bevorzugt liegt der Anteil an Säure beziehungsweise Säureanhydrid zwischen 0,5 und 4 Gew.-% bezogen auf das gesamte Blockcopolymer, besonders bevorzugt 0,7 bis 2,5 Gew.-%.

Neben Styrolblockcopolymeren können auch Blockcopolymere anderer Vinylaromaten zum Einsatz kommen wie Blockcopolymere aus alpha-Methylstyrol oder ähnlichem. Typische Einsatzkonzentrationen für die Vinylaromatenblockcopolymere liegen im Bereich zwischen 20 Gew.-% und 70 Gew.-%, bevorzugt im Bereich zwischen 30 Gew.-% und 60 Gew.-% besonders bevorzugt im Bereich zwischen 35 Gew.-% und 55 Gew.-%.

Erfindungsgemäße Haftklebemassen können chemisch, insbesondere strahlenchemisch (zum Beispiel durch UV-Bestrahlung, γ-Bestrahlung oder durch Bestrahlung mittels schneller Elektronen) vernetzt sein.

Als Klebrigmacher nutzen erfindungsgemäße Haftklebemassen als Hauptkomponente insbesondere Klebharze, die mit dem Elastomerblock der Styrolblockcopolymere verträglich sind.
Bevorzugt geeignet sind unter anderem nicht hydrierte, partiell- oder vollständig hydrierte Harze auf Basis von Kolophonium und Kolophoniumderivaten, hydrierte Polymerisate des Dicyclopentadiens, nicht hydrierte, partiell, selektiv oder vollständig hydrierte Kohlenwasserstoffharze auf Basis von C₅-, C₅/C₉- oder Cg-Monomerströmen, Polyterpenharze auf Basis von α-Pinen und/oder β-Pinen und/oder δ-Limonen, hydrierte Polymerisate von bevorzugt reinen C₈- und C₉-Aromaten. Vorgenannte Klebharze können sowohl allein als auch im Gemisch eingesetzt werden.

Als weitere Additive können typischerweise genutzt werden:
- primäre Antioxidanzien wie zum Beispiel sterisch gehinderte Phenole
- sekundäre Antioxidanzien wie zum Beispiel Phosphite oder Thioether
- Prozessstabilisatoren wie zum Beispiel C-Radikalfänger
- Lichtschutzmittel wie zum Beispiel UV-Absorber oder sterisch gehinderte Amine
- Verarbeitungshilfsmittel
- Endblockerstärkerharze
- Füllstoffe wie zum Beispiel Siliziumdioxid, Glas (gemahlen oder in Form von Kugeln), Aluminiumoxide, Zinkoxide, Calciumcarbonate, Titandioxide, Ruße, etc. ebenso wie Farbpigmente und Farbstoffe sowie optische Aufheller
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene, wie natürliches oder synthetisch erzeugtes Polyisopren oder Polybutadien, chemisch im wesentlichen gesättigte Elastomere, wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe, wie zum Beispiel halogenhaltige, acrylathaltige oder vinyietherhaltige Polyolefine, um nur einige wenige zu nennen.

Plastifizierungsmittel, wie zum Beispiel Flüssig harze, Weichmacheröle oder niedermolekulare flüssige Polymere, wie zum Beispiel niedermolekulare Polybutene mit Molmassen < 1500 g/mol (Zahlenmittel), werden lediglich in sehr geringen Mengen von ≤ 10 Gew.-% eingesetzt, bevorzugt wird auf ihre Verwendung vollständig verzichtet.

Dabei erfindungsgemäßen Klebestreifen können unterschiedlich aufgebaut sein. Zum einen lassen sich erfindungsgemäße Klebmassen in Mehrschichtaufbauten mit einem Zwischenträger einsetzen. Dabei sind sowohl überwiegend elastische Träger, wie sie zum Beispiel in US 4,024,312 A oder DE 197 08 366 A1 beschrieben sind, als auch überwiegend plastische Träger wie in WO 92/11333 A1 oder zum Beispiel DE 196 49 727 A1 beschrieben möglich.
Auch einseitig klebrige Klebebänder, die nur auf einer Seite eines Trägers eine Klebmasseschicht besitzen sind möglich. Auch Klebebänder, die zwar doppelseitig mit Klebmasse ausgerüstet sind, aber auf beiden Seiten des Trägers eine unterschiedliche Klebmasse tragen sind denkbar. Diese Klebebänder können besonders gut für die Verklebung zweier sehr unterschiedlicher Materialien eingesetzt werden, wobei die beiden Klebmassen dann genau auf den jeweiligen Untergrund abgestimmt sein können. Zum dritten sind Klebestreifen ohne Träger herstellbar, die nur aus der Klebmasse bestehen, wobei in diesem Fall neben den klebtechnischen auch besondere mechanische Ansprüche an die Klebmasse gestellt werden.

Das Verhältnis der Reißkraft und der Abzugskraft muss größer als zwei, bevorzugt größer als drei sein.
Das Verhältnis von Abzugskraft und Reißkraft wird stark durch die Dicke der Klebestreifen beeinflusst. Die zum Ablösen benötigte Abzugskraft setzt sich aus der Kraft zusammen, welche für das Ablösen des Klebebandes von den Verklebungsuntergründen nötig ist, und der Kraft, welche zur Verformung des Klebebandes aufgewendet werden muss. Letztere ist annähernd der Dicke des Klebebandes proportional, erstere kann im betrachteten Dickenbereich vereinfacht als konstant angenommen werden. Die Reißfestigkeit steigt auf der anderen Seite proportional zu seiner Dicke an. Hieraus folgt, dass für Selbstklebebänder entsprechend DE 33 31 016 C2 die Reißfestigkeit unterhalb einer bestimmten Dicke kleiner als die Abzugskraft wird, mithin entsprechend dünne Produkte nicht mehr durch Verstrecken in der Verklebungsebene von den Haftgründen lösbar sind, vielmehr zerreißen diese bei einem entsprechenden Versuch.
Die Abzugskraft sollte pro Klebestreifen nicht größer als 30 N sein, da ansonsten die Kraft besonders für Kinder zu groß ist. Die Abzugskraft ist stark abhängig von der Glasübergangstemperatur des gesamten Systems. Liegt die Nutztemperatur (Raumtemperatur) sehr nahe an der Glasübergangstemperatur erhöhen sich die Abzugskräfte gewaltig. Das kann dazu führen, dass die Klebestreifen sehr hart und tackfrei werden. Die Gebrauchstemperatur sollte mindestens 5 °C besser 10 °C über der Glasübergangstemperatur liegen.

Da die säure- beziehungsweise säureanhydridmodifizierten Elastomere sich in ihren mechanischen Eigenschaften genau so verhalten, wie ihre unmodifizierten Analoga, können auch nur Teile der Elastomere säuremodifiziert sein. Auch die Klebeigenschaften der fertigen Klebestreifen mit modifizierten Elastomeren sind denen mit Elastomeren ohne Säuremodifikation auf den meisten Untergründen sehr ähnlich. Die Abzugskräfte beziehungsweise Stripkräfte sind sehr leicht erhöht, die Reißkräfte aber gleich. Die säuremodifizierten Elastomere bieten einen weiteren Vorteil, durch die höhere Polarität gegenüber den nicht modifizierten Elastomeren sind sie in der Lage, die Harze und Alterungsschutzmittel besser zu lösen, so dass es weniger leicht zu Unverträglichkeiten kommt.

Im Gegensatz zu den bekannten Klebebändern, die durch dehnendes Verstrecken wieder abgelöst werden können, die weder eine Beschädigung des Untergrundes verursachen, bei denen noch Rückstände des Klebebandes nach dem Ablösen erkennbar sind, ist erfindungsgemäß ein Klebeband geschaffen worden, das bewusst den Untergrund beim Abstrippen zerstört, um ein unbefugtes Ablösen erkennen zu können. Besonders geeignet sind diese Klebebänder für den Einsatz als Verpackungsklebestreifen, bei denen aus Sicherheitsgründen sichergestellt sein muss, dass die Verpackung nicht schon vorher geöffnet wurde.
Vorteilhaft ist auf der anderen Seite, dass diese Klebestreifen von festen Untergründen hingegen rückstandslos und zerstörungsfrei ablösbar sind.

### Prüfmethoden:

### Zugfestigkeit // maximale Dehnung

Messungen erfolgen, wenn nicht anders vermerkt, in Anlehnung an DIN 53504 mit Verwendung von Schulterstäben der Größe S3 sowie bei einer Separationsgeschwindigkeit von 300 mm/min.

### Ablösekraft (Stripkraft; Stripspannung)

Zur Ermittlung der Ablösekraft (Stripkraft) wird ein Haftklebestreifen der Abmessungen 50 mm *20 mm (Länge* Breite), mit am oberen Ende nicht haftklebrigem Anfasserbereich, zwischen zwei Stahlplatten (deckungsgleich zueinander angeordnet) der Abmessungen 50 mm x 30 mm mit einem Anpressdruck von jeweils 500 N verklebt. Die Stahlplatten tragen an ihrem unteren Ende je eine Bohrung zur Aufnahme eines S-förmigen Stahl hakens. Das untere Ende des Stahlhakens trägt eine weitere Stahlplatte, über welche die Prüfanordnung zur Messung in der unteren Klemmbacke einer Zugprüfmaschine fixiert werden kann. Die Verklebungen werden 24 h bei +40 °C gelagert. Nach Rekonditionierung auf Raumtemperatur wird der Klebfolienstreifen mit einer Zuggeschwindigkeit von 1000 mm/min parallel zur Verklebungsebene und kontaktfrei zu den Kantenbereichen der beiden Stahlplatten, herausgelöst. Dabei wird die erforderliche Ablösekraft in N gemessen. Angegeben wird der Mittelwert der Ablösespannung (in N/mm²) in dem Bereich in welchem der Klebestreifen zwischen 10 mm und 40 mm von den Stahluntergründen abgelöst ist.

### Schälfestigkeit

Zur Ermittlung der Schälfestigkeit werden die zu untersuchenden Haftklebestreifenmuster einseitig vollflächig mit einer 23 µm starken PETP-Folie (Hostaphan RN 25; Mitsubishi Chemicals) luftblasenfrei einkaschiert, danach die zweite Klebfolienstreifenseite an einem Ende mit einem ca. 6 mm langen Folienstreifen (ebenfalls Hostaphan RN 25) abgedeckt, so dass an diesem Ende ein beidseitig nicht haftklebriger Anfasserbereich entsteht. Hiernach wird der zu prüfende Klebfolienstreifen vorderseitig, mit leichtem Fingerandruck auf den Prüfuntergrund (gestrichene Raufasertapete: Tapete = Erfurt Körnung 52, Farbe = Herbol Zenit LG, Tapete verklebt auf Pressspanplatte) aufgeklebt. Muster werden anschließend 10 s lang bei einem Anpressdruck von 90 N pro 10 cm² Haftklebefläche angedrückt, danach 15 Minuten bei 40 °C konditioniert. Die Prüfplatten werden anschließend horizontal fixiert, so dass der anfassbare Bereich der Klebestreifen nach unten gerichtet ist. An den nicht klebenden Anfasser wird mit Hilfe einer Klemme (20 g) ein Gewicht von 20 g befestigt, so dass die entstehende Schälbelastung (ca. 0,4 N pro 20 mm Klebestreifenbreite) orthogonal zur Verklebungsebene wirkt. Nach 15 Minuten und nach 24 h wird diejenige Strecke markiert, die der Klebestreifen vom Verklebungsuntergrund seit Versuchsbeginn abgeschält ist. Der Abstand zwischen beiden Markierungen wird als Schälweg (Einheit: mm pro 24 h) angegeben.

### Herstellung der Prüfkörper

### Herstellung der Haftklebestreifen

Die Haftklebemassen werden in einem heizbaren Kneter mit Sigma-Schaufel (Werner & Pfleiderer LUK 1,0 K3 ausgerüstet mit einem Thermostaten LTH 303 der Firma mgw LAUDA) bei einer Temperatur von ca. +160 bis +180 °C und unter Inertisierung mit CO₂ als Schutzgas zu einer homogenen Mischung verarbeitet. Nach dem Erkalten werden durch ca. zehnminütiges Verpressen der Klebmasse bei +120 °C bis +140 °C (temperierbare Presse: Typ KHL 50 der Firma Bucher-Guyer) einschichtige Klebstofffolienstücke der Dicke 700 µm ± 50 µm (Mittelwert ± 2-fache Standardabweichung) hergestellt. Einschichtige Haftklebestreifen der gewünschten Abmessungen werden durch Ausstanzen erhalten. Im Falle der Herstellung mehrschichtiger Haftklebestreifen werden die entsprechenden Schichten zuvor durch Kaschierung (gegebenenfalls durch Heißkaschierung) erhalten und danach die Klebestreifen durch Ausstanzen vereinzelt.

Im Folgenden wird ein Beispiel eines Klebestreifens, der nach obiger Herstellanweisung gefertigt wurde, beschrieben, um die Erfindung klarer werden zu lassen, aber ohne damit die Erfindung in irgendeiner Weise einschränken zu wollen.

### Beispiele

| | | |
|---|---|---|
| Beispiel 1 | Kraton^{™} FG 1901¹⁾ | 15% |
| | Kraton^{™} FG 1924X²⁾ | 35% |
| | Regalite^{™} R 1100⁵⁾ | 50% |
| Beispiel 2 (Vergleichsbeispiel) | Kraton^{™} G 1650³⁾ | 15% |
| | Kraton^{™} G 1657⁴⁾ | 35% |
| | Regalite^{™} R 1100⁵⁾ | 50% |

| | | |
|---|---|---|
| ¹⁾ maleinsäureanhydridmodifiziertes SEBS mit 30% Blockpolystyrol der Firma Kraton ²⁾ maleinsäureanhydridmodifiziertes SEBS mit 13% Blockpolystyrol der Firma Kraton ³⁾ SEBS mit 30% Blockpolystyrol (unmodifiziertes Analogon zu FG 1901) ⁴⁾ SEBS mit 13% Blockpolystyrol (unmodifiziertes Analogon zu FG 1924) ⁵⁾ Hydriertes Kohlenwasserstoffharz mit einem Erweichungspunkt von ca. 100 °C der Firma Eastman | | |

### Mechanische und klebtechnische Daten

| Beispiel Nr. | Reißkraft | Ablösespannung | Schälgeschwindigkeit |
|---|---|---|---|
| | in MPa | in N/mm² | In mm/24h |
| 1 | 9.2 | 1,8 | 14* |
| 2 | 9,5 | 1,9 | 16* |

Von beiden Mustern wurden Klebestreifen zwischen zwei Standardpapieren (80 g, holzfrei) verklebt und über 14 Tage bei Raumtemperatur gelagert. Während sich das Vergleichsbeispiel problemlos ablösen ließ, ohne Klebmassereste zu hinterlassen oder eines der beiden Papiere zu beschädigen, verhielt sich das Beispiel 1 völlig anders. Auch hier gab es keine Klebmassereste, aber das Papier wurde stark geschädigt. Allerdings riss das Papier nicht ein, stattdessen gab es sehr starke Faserausrisse an den Stellen, an denen die Klebestreifen verklebt waren. Diese Fasereinrisse waren sehr deutlich, selbst auf dem abgezogenen Klebestreifen waren die Papierfasern noch zu erkennen.

## Patentansprüche

1. Verwendung eines Haftklebestreifens, der sich durch dehnendes Verstrecken im wesentlichen in der Verklebungsebene wieder lösen lässt, zur Verklebung auf Papier oder Pappe aus einer Klebemasse mit zumindest einem Vinylaromatenblockcopolymer, das säure- oder säureanhydridmodifiziert ist, wobei der Haftklebestreifen beim Ablösen zu Faserausrissen führt.

2. Verwendung eines Haftklebestreifens nach Anspruch 1, **dadurch gekennzeichnet, dass** die Vinylaromatenblockcopolymere Styrolblockcopolymere sind, die vorzugsweise einen hydrierten Weichblock enthalten.

3. Verwendung eines Haftklebestreifens nach Anspruch 1 oder 2, **dadurch gekennzeichnet, dass** es sich bei den Styrolblockcopolymeren um SEBS (Styrol-Ethylenbutylen-Styrol-Blockcopolymer) oder SEPS (Styrol-Ethylenpropylen-Styrol-Blockcopolymer) handelt.

4. Verwendung eines Haftklebestreifens nach zumindest einem der Ansprüche 1 bis 3, **dadurch gekennzeichnet, dass** die modifizierten Elastomere mit Maleinsäureanhydrid modifiziert wurden mit einem Gewichtsanteil an Maleinsäureanhydrid von 0,5 bis 4 Gew.%, bevorzugt 0,7 bis 2,5 Gew.%.

5. Verwendung eines Haftklebestreifens nach zumindest einem der vorhergehenden Ansprüche, **dadurch gekennzeichnet, dass** die Blockcopolymere der Klebmasse einen Polyvinylaromatenanteil von 20 Gew.-% bis 70 Gew.-% besitzen.

6. Verwendung eines Haftklebestreifens nach zumindest einem der vorhergehenden Ansprüche, **dadurch gekennzeichnet, dass** die Klebmasse neben den Elastomeren Klebharze enthält.

7. Verwendung eines Haftklebestreifens nach zumindest einem der vorhergehenden Ansprüche, **dadurch gekennzeichnet, dass** die Klebmasse weitere Abmischkomponenten enthält, insbesondere Weichmacher, Alterungsschutzmittel, Verarbeitungshilfsmittel, Füllstoffe, Farbstoffe, optische Aufheller, Stabilisatoren, Endblockverstärkerharze.

8. Verwendung eines Haftklebestreifens nach zumindest einem der vorhergehenden Ansprüche, **dadurch gekennzeichnet, dass** der Haftklebestreifen einen dehnbaren Träger besitzt.

9. Verwendung eines Haftklebestreifens nach zumindest einem der vorhergehenden Ansprüche, **dadurch gekennzeichnet, dass** der Haftklebestreifen nur aus Klebmasse besteht.

## Claims

1. Use of a pressure-sensitive adhesive strip removable by extensive stretching substantially in the bond plane, intended for bonding to paper or cardboard, comprising an adhesive with at least one acid-modified or acid anhydride-modified vinylaromatic block copolymer, the detachment of the pressure-sensitive adhesive strip resulting in fibre extraction.

2. Use of a pressure-sensitive adhesive strip according to Claim 1, **characterized in that** the vinylaromatic block copolymers are styrene block copolymers which preferably contain a hydrogenated soft block.

3. Use of a pressure-sensitive adhesive strip according to Claim 1 or 2, **characterized in** the styrene block copolymers are SEBS (styrene-ethylene/butylene-styrene block copolymer) or SEPS (styrene-ethylene/propylene-styrene block copolymer).

4. Use of a pressure-sensitive adhesive strip according to at least one of Claims 1 to 3, **characterized in that** the modified elastomers have been modified with maleic anhydride, with a maleic anhydride weight fraction of 0.5% to 4% by weight, preferably 0.7% to 2.5% by weight.

5. Use of a pressure-sensitive adhesive strip according to at least one of the preceding claims, **characterized in that** the block copolymers of the adhesive possess a polyvinylaromatic fraction of 20% to 70% by weight.

6. Use of a pressure-sensitive adhesive strip according to at least one of the preceding claims, **characterized in that** as well as the elastomers the adhesive comprises tackifier resins.

7. Use of a pressure-sensitive adhesive strip according to at least one of the preceding claims, **characterized in that** the adhesive comprises further blend components, especially plasticizers, ageing inhibitors, processing aids, fillers, dyes, optical brighteners, stabilizers, endblock reinforcer resins.

8. Use of a pressure-sensitive adhesive strip according to at least one of the preceding claims, **characterized in that** the pressure-sensitive adhesive strip possesses an extensible backing.

9. Use of a pressure-sensitive adhesive strip according to at least one of the preceding claims, **characterized in that** the pressure-sensitive adhesive strip is composed only of adhesive.

## Revendications

1. Utilisation d'une bande adhésive de contact pouvant se détacher de nouveau par étirage sous tension sensiblement dans le plan de collage, pour le collage sur papier ou carton, à base d'une masse adhésive comprenant au moins un copolymère séquencé de vinylaromatiques modifié par un acide ou un anhydride d'acide, où la bande adhésive de contact conduit, lors du décollement, à des déchirures de fibres.

2. Utilisation d'une bande adhésive de contact suivant la revendication 1, **caractérisée en ce que** les copolymères séquencés de vinylaromatiques sont des copolymères séquencés de styrène, qui contiennent de préférence un bloc mou hydrogéné.

3. Utilisation d'une bande adhésive de contact suivant la revendication 1 ou 2, **caractérisée en ce que** le copolymère séquencé de styrène est du SEBS (copolymère séquencé de styrène - éthylène-butylène - styrène) ou du SEPS (copolymère séquencé de styrène - éthylène-propylène - styrène).

4. Utilisation d'une bande adhésive de contact suivant au moins l'une quelconque des revendications 1 à 3, **caractérisée en ce que** les élastomères modifiés sont modifiés par de l'anhydride d'acide maléique avec une fraction pondérale d'anhydride d'acide maléique de 0,5 à 4% en poids, de préférence de 0,7 à 2,5% en poids.

5. Utilisation d'une bande adhésive de contact suivant au moins l'une quelconque des revendications précédentes, **caractérisée en ce que** les copolymères séquencés de la masse adhésive possèdent une fraction de polyvinylaromatiques de 20% en poids à 70% en poids.

6. Utilisation d'une bande adhésive de contact suivant au moins l'une quelconque des revendications précédentes, **caractérisée en ce que** la masse adhésive contient, outre l'élastomère, des résines adhésives.

7. Utilisation d'une bande adhésive de contact suivant au moins l'une quelconque des revendications précédentes, **caractérisée en ce que** la masse adhésive contient d'autres composants de mélange, en particulier des plastifiants, des agents de protection contre le vieillissement, des adjuvants de transformation, des charges, des colorants, des azurants optiques, des stabilisants, des résines de renforcement de blocs terminaux.

8. Utilisation d'une bande adhésive de contact suivant au moins l'une quelconque des revendications précédentes, **caractérisée en ce que** la bande adhésive de contact possède un support extensible.

9. Utilisation d'une bande adhésive de contact suivant au moins l'une quelconque des revendications précédentes, **caractérisée en ce que** la bande adhésive de contact consiste uniquement en une masse adhésive.
